# EUROPÄISCHE PATENTANMELDUNG

(11) **EP 2 641 717 A1**
(43) Veröffentlichungstag der Anmeldung: **25.09.2013**
(21) Anmeldenummer: 12160394.8
(22) Anmeldetag: 20.03.2012
(51) Int. Cl.: B29C 44/12, B29C 70/68, C08J 9/00, C08J 9/04, C08J 9/232

(54) **Schäumbare Zusammensetzung mit geringer Wärmeleitfähigkeit für den Einsatz in Kunststoff-Profilen**

(71) Anmelder: Sika Technology AG, 6340 Baar (CH)
(72) Erfinder: Ackermann, Herbert, 8632 Tann (CH); Hoefflin, Frank, 5400 Baden (CH); Brunner, Andreas, 8197 Rafz (CH)
(74) Vertreter: Sika Patent Attorneys

(57) **Zusammenfassung**

Die vorliegende Erfindung betrifft eine schäumbare Zusammensetzung, umfassend mindestens ein Basispolymer, mindestens ein Treibmittels und mindestens ein Gleitmittels und/oder mindestens ein Hitzestabilisators sowie gegebenenfalls weitere Additive, ausgewählt aus Vernetzungsmitteln, Wärmereflektoren, Wärmeflussadditiven, Antikondensationsadditiven und/oder Füllstoffen. Entsprechende Zusammensetzungen können zu Polymerschäumen verarbeitet werden, die sich durch eine Wärmeleitfähigkeit von < 0,04 E/(mK), eine Expansion von größer gleich 1000% und eine Schweißbarkeit von (mehr als??) 80 Sekunden bei 240-260°C auszeichnen. Entsprechende Polymerschäume können vorteilhaft mit Hilfe einer Co-Extrusion in Kunststoffhohlprofile für Fenster und Türen eingebracht werden und somit zur Herstellung von Tür- und Fensterrahmen mit geringen Wärmeleitfähigkeitswerten genutzt werden.

## Beschreibung

### Technisches Gebiet

Die Erfindung betrifft eine schäumbare Zusammensetzung mit hohem Expansionsvolumen und geringer Wärmeleitfähigkeit, welche insbesondere als Füllmaterial für Hohlräume für Fenster, Türen und dergleichen geeignet ist. Weiterhin betrifft die Erfindung einen Polymerschaum, der durch eine geringe Wärmeleitfähigkeit, eine hohe Expansion sowie eine vorteilhafte Schweißbarkeit gekennzeichnet ist.

Die Erfindung betrifft ebenfalls Kunststoffprofile, die mindestens einen Hohlraum aufweisen, in den eine schäumbare Zusammensetzung, wie vorstehend beschrieben, eingebracht wurde. Schließlich betrifft die Erfindung ein Verfahren zur Herstellung von Kunststoffprofilen, wobei eine schäumbare Zusammensetzung während des Extrudierens des Kunststoffprofils in mindestens einen der Höhlräume des Profils eingebracht und geschäumt wird.

### Stand der Technik

Die Fenster- und Türindustrie muss sich in den letzten Jahren an immer neue Anforderungen in Bezug auf eine verbesserte thermische Isolation von Festern und Türen einstellen. Dies zeigt sich unter anderem in immer strengeren Richtlinien, welche die Fensterbauer und deren Lieferanten vor immer größere Herausforderungen stellen.

Traditionell werden zur Versteifung von extrudierten Kunststoffhohlprofilen Stahlprofile in den Hohlraum eines Kunststoffhohlprofils eingeschoben um eine hinlängliche Steifigkeit der Profile zu erzielen. Derartig verstärkte Kunststoffprofile werden beispielsweise als Rahmen und/oder Flügelprofile von Fenstern, Türen und dergleichen eingesetzt. Der verwendete Kunststoff ist dabei meistens Polyvinylchlorid (PVC). Ein Nachteil von mit Stahlprofilen verstärkten Kunststoffprofilen besteht jedoch darin, dass durch den Einsatz von Metall im Inneren des Kunststoffprofils die Wärmedämmung erheblich beeinträchtigt wird. Dies ist auf die hohe Wärmeleitfähigkeit von Metallen, insbesondere Stahl, zurückzuführen. Zur Erzielung einer verbesserten Wärmedämmung wird die Hohlkammer des Stahlprofils, welches in das Kunststoffprofil eingeschoben wird, mit einem schäumbaren Material, beispielsweise mit einem Polyurethanschaum, ausgeschäumt. Die nachträgliche Ausschäumung einer Hohlkammer erweist sich jedoch als sehr umständlich, da Fensterprofile üblicherweise in einer Länge von mehreren Metern extrudiert werden und die Ausschäumung mittels langer Sonde vorgenommen werden muss. Der ersatzlose Verzicht auf Metallprofile zur Verstärkung von Kunststoffprofilen ist aufgrund der geringen Steifigkeit jedoch nicht möglich.

Um dennoch weitestgehend auf Metall im Innern des Kunststoff-Profils verzichten zu können, werden in letzter Zeit zur Verstärkung thermisch isolierende Verstärkungsprofile eingesetzt, welche aus faserverstärkten Kunststoffen hergestellt und mit Polymerschaum gefüllt werden. Dies hat den zusätzlichen Vorteil, dass Schäume im Vergleich zu Luft bessere thermische Eigenschaften aufweisen. Speziell in größeren Fenstern kann durch Schäume die Luftzirkulation und der damit verbundene Wärmetransport effektiv unterdrückt werden.

Beispielsweise werden mit Zweikomponentenpolyurethanschäumen gefüllte Profile vorgeschlagen, die schweißbar sind und in denen die Hohlräume fertiger Profile mit Polyurethan Schaum gefüllt werden. Dazu werden beide Polyurethankomponenten mit Hilfe von langen Spritzen unter hohem Druck in die Hohlräume des Profils injiziert und geschäumt. Problematisch bei diesen Systemen ist es jedoch, dass bei Polyurethanen ein vollständiges Abreagieren der Isocyanatmonomere nicht einfach zu realisieren ist. Dies hat Auswirkungen auf die spätere Verarbeitbarkeit entsprechender Fensterprofile, da beim Zurechtschneiden und Anpassen der Profile Isocyanatrestmonomere freigesetzt werden können. Um dies zu verhindern müssen zusätzliche Sicherheitsmaßnahmen getroffen und teure Versicherungen abgeschlossen werden. Zudem müssen die Polyurethankomponenten vor Ort gelagert und es muss bei der Lagerung auf eine Vermeidung der Exposition mit diesen Verbindungen geachtet werden. Schließlich haben Zweikomponentenpolyurethansysteme den Nachteil, dass sie wegen möglichem freien Isocyanat in eine niedrigere Flammschutzklasse eingestuft werden müssen.

In einem alternativen Ansatz wurden expandierte Polystyrolschäume beschrieben, bei denen der Schaumkörper zunächst außerhalb des Fensterprofils hergestellt und anschließend in ein Profil eingeschoben wird. Auch diese Alternative weist jedoch den Nachteil auf, dass ein zweistufiges Verfahren für die Herstellung solcher Profile mit einem erheblichen Aufwand verbunden ist und die Herstellung passgenauer Schaumkörper zusätzliche Apparaturen benötigt.

Eine Lösung für dieses Problem schlägt die WO 2009/062986 A1 vor, nach der ein schäumbares Material in Form eines Granulats während der Extrusion eines PVC-Profils in den Hohlraum des Profils eingebracht wird. Durch Kontakt mit dem noch heißen Profil wird ein im Granulat enthaltenes Treibmittel aktiviert und eine Schäumung des Materials im noch heißen PVC-Profil erreicht. Bei diesem Verfahren ist es notwendig, dass der Schaum mit dem Profilkunststoff inkompatibel ist, da es sonst zu einem unerwünschten Verkleben des Schaums mit dem Kunststoff kommen würde. Als problematisch bei dieser Vorgehensweise hat es sich jedoch herausgestellt, dass der Hohlraum in dem Profil mit Zusammensetzungen, die im Wesentlichen aus einem schäumbaren Basispolymer und einem Treibmittel bestehen, nicht vollständig gefüllt werden kann, da eine Schäumung erst bei Kontakt mit einer Oberfläche des Hohlprofils erfolgt. Dies führt teilweise dazu, dass der Profilrahmen nicht gleichmäßig ausgefüllt werden kann.

Als weiteres Problem, dass beim Schäumen innerhalb eines extrudierten und damit noch heißen Profils auftritt, hat es sich herausgestellt, dass insbesondere dünne Profilwände während der Expansion des Schaums stark deformiert werden können. Schließlich besteht ein Nachteil existierender Schaumzusammensetzungen darin, dass sich der Schaum während des Abkühlens wieder zusammenzieht, so dass eine vollständige Ausfüllung des Hohlraums nur schwer zu gewährleisten ist und Hohlräume entstehen, die die Wärmeleitfähigkeit des Profils erhöhen.

### Darstellung der Erfindung

Der Erfindung liegt daher die Aufgabe zugrunde, eine schäumbare Zusammensetzung zur Verfügung zu stellen, die während der Herstellung von Kunststoffprofilen direkt in die noch heißen extrudierten Profile eingebracht werden kann und somit eine kostengünstigere Alternative zum nachträglichen "Einschieben" von vorgeformten Schäumen in das Profil darstellt. Gleichzeitig soll der Schaum so beschaffen sein, das er den Hohlraum während des Schäumens möglichst gleichmäßig ausfüllt ohne die Profilwände signifikant zu verformen und sich während des Abkühlens nicht merklich zusammenzieht. Erfindungsgemäß wird dies durch eine schäumbare Zusammensetzung gemäß dem ersten Anspruch erreicht.

Kern der Erfindung ist demzufolge eine schäumbare Zusammensetzung, die mindestens ein Basispolymer, mindestens Treibmittel, sowie mindestens ein Gleitmittel und/oder mindestens einen Hitzestabilisator umfasst. Der Gehalt an dem Basispolymer sollte dabei vorzugsweise mindestens 50 Gew.-% betragen. Weiterhin sollte das Basispolymer vorzugsweise so gewählt werden, dass es nicht mit dem Profilkunststoff kompatibel ist und während des Schäumens nicht mit diesem verklebt. Um eine ausreichende Schäumung zu gewährleisten hat sich ein Gehalt an Treibmittel im Bereich von 5 bis 20 Gew.-% als zweckmäßig erwiesen. Das Gleitmittel und/oder der Hitzestabilisator sind vorzugsweise in Mengen von 0,1 bis 5 Gew.-%, bezogen auf die schäumbare Zusammensetzung, in dieser enthalten. Mit einer solchen Zusammensetzung können Polymerschäume mit einer Wärmeleitfähigkeit von < 0,04 W/(mK), einer Expansion von ≥ 1000%, insbesondere von ≥ 2000%, und/oder eine Schweißbarkeit von etwa 80 sec. bei 240 bis 260°C.

Weitere Aspekte der Erfindung betreffen die Verwendung der beschriebenen schäumbaren Zusammensetzung für das Ausschäumen von Hohlräumen in Hohlkörpern, sowie Schaumgefüllte Hohlkörper, insbesondere in Form von Fenster- oder Türprofilen, die mindestens einen Hohlraum aufweisen, in den eine wie vorstehend beschriebene schäumbare Zusammensetzung eingebracht und aufgeschäumt wurde, sowie ein Verfahren zur Herstellung von schaumgefüllten Hohlkörpern, bei dem eine wie vorstehend beschriebene schäumbaren Zusammensetzung in mindestens einen Hohlraum des Hohlkörpers eingebracht und aufgeschäumt wird.

Die Vorteile der Erfindung sind u.a. darin zu sehen, dass die schäumbare Zusammensetzung nicht erst nachträglich, sondern bereits während der Extrusion eines Kunststoffprofils in mindestens einen der Hohlräume des Profils eingebracht wird. Weiterhin vorteilhaft sind die verbesserten mechanischen Eigenschaften sowie die verbesserte Wärmedämmung der Kunststoffprofile. Diese Eigenschaften können durch die Wahl des schäumbaren Materials zusätzlich beeinflusst werden. Ein weiterer Vorteil der erfindungsgemäßen Polymerschäume liegt in ihrer außerordentlich hohen Expansion von ≥ 1000%, insbesondere von ≥ 2000%, die auch während einer länger andauernden Hitzebehandlung erhalten bleibt. Zudem zeichnen sich die erfindungsgemäßen Schäume durch eine vorteilhafte Wärmeleitfähigkeit von < 0,04 W/(mK) aus sowie eine Schweißbarkeit von etwa 80 Sekunden bei 240 bis 260°C. Schließlich kommt es beim Aufschäumen der erfindungsgemäßen schäumbaren Zusammensetzungen nicht zu einer merklichen Deformierung der Kunststoffprofile und das Volumen des Schaums vermindert sich während des Abkühlens nur insignifikant.

### Kurze Beschreibung der Zeichnungen

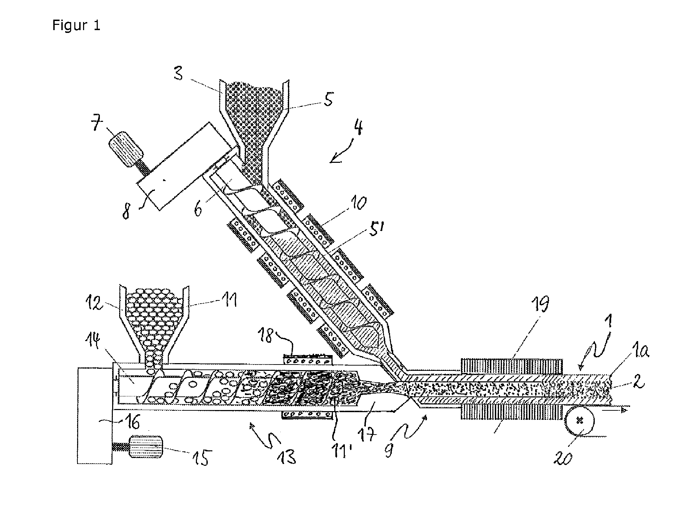

Vorteile und Zweckmäßigkeiten der Erfindung ergeben sich im Übrigen aus der nachfolgenden Beschreibung von Ausführungsbeispielen und -aspekten, teilweise anhand der Figur 1. Diese zeigt:
- Fig. 1: eine schematische Darstellung zur Erläuterung einer Ausführungsform des erfindungsgemäßen Verfahrens, in Art einer Längsschnittdarstellung durch eine Koextrusions-Anordnung,

### Wege zur Ausführung der Erfindung

Mit "Poly" beginnende Substanznamen wie beispielsweise Polyisocyanat, Polyurethan, Polyester oder Polyol bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch so genannte Prepolymere, das heißt reaktive oligomere Voraddukte, deren funktionelle Gruppen am Aufbau von Makromolekülen beteiligt sind.

Der Begriff "Hitzestabilisator" ist im Zusammenhang der vorliegenden Erfindung so zu verstehen, dass der entstandene Schaum auch bei längerer Exposition (10 Minuten oder mehr) von hohen Temperaturen (150°C oder mehr) einer signifikanten Volumenverminderung (10% oder mehr) unterliegt. Der Hitzestabilisator stabilisiert also den entstandenen Schaum während der Verarbeitung gegenüber dem Zerfall.

Als "Kunststoffhohlprofil" (auch "Außenprofil" genannt) wird in diesem Dokument ein länglicher Hohlkörper aus Kunststoff bezeichnet, dessen Länge in der Regel wesentlich größer ist als sein Querschnitt. In einem Co-Extrusionsverfahren, in welchem ein zweites Material in das Innere diese Hohlkörpers co-extrudiert wird, wobei der Hohlkörper vollständig ausgefüllt wird, bezieht sich der Begriff Kunststoffhohlprofil nur auf diesen äußeren Kunststoffkörper. Das innere Material wird "Kern" genannt.

Der Begriff "Kunststoffprofil" bezeichnet im vorliegenden Dokument das gesamte Element, das heißt das Kunststoffhohlprofil inklusive Kern.

Der Begriff "Fettsäure" bezeichnet im vorliegenden Dokument lineare aliphatische Carbonsäuren, die ein oder mehrere Doppelbindungen aufweisen können. In diesem Fall werden die Fettsäuren auch als ein- oder mehrfach ungesättigte Fettsäuren bezeichnet.

Der Begriff "Fettsäurealkohol" bezeichnet im vorliegenden Dokument Fettsäurederivate in denen die für die Fettsäure charakteristische Carboxylgruppe reduktiv in eine -CH₂OH Funktion umgewandelt wurde.

Der Begriff "schaumgefüllter Hohlkörper" bezeichnet im vorliegenden Dokument Hohlkörper die sowohl ganz oder teilweise mit einem Schaum gefüllt sein können.

Als Basispolymer der schäumbaren Zusammensetzung, die zur Herstellung von Kernen von Kunststoffprofilen herangezogen werden kann, kann grundsätzlich jedes beliebige Material eingesetzt werden, das kontrolliert zum Schäumen gebracht werden kann und Verstärkungseigenschaften aufweist. Das Basispolymer sollte vorzugsweise mit dem Profilmaterial inkompatibel sein nicht auf diesem haften. Besonders bevorzugt haftet die in ein Profil eingebrachte schäumbare Zusammensetzung nicht auf PVC.

Bei dem Basispolymer handelt es sich jedoch vorzugsweise um ein organisches Polymer mit einem Schmelzpunkt im Bereich von 20 bis 400°C. Das Basispolymer sollte zweckmäßig bei einer Temperatur erweichen, welche unterhalb der Schäumungstemperatur liegt, und seine Verformung während des Schäumungsvorgangs ermöglicht wird. Ist die Schäumungstemperatur erreicht, wird das Basispolymer geschäumt. Besonders bevorzugt ist es, wenn das Basispolymer einen Schmelzpunkt im Bereich von 60 bis 200°C aufweist. Weiterhin sollte ein allfälliger Aushärtungsvorgang vorzugsweise erst einsetzen, wenn die Schäumungstemperatur überschritten und die Schäumung zumindest teilweise abgeschlossen ist.

Geeignete Basispolymere sind dem Fachmann ohne weiteres geläufig. Besonders bevorzugt ist das Basispolymer im Rahmen der vorliegenden Erfindung ausgewählt aus der Gruppe, umfassend EVA, Polyolefin, Polyvinylchlorid oder XPS (vernetztes Polystyrol). Bevorzugte Polyolefine sind auf Ethylen oder Propylen basierende Polymere, von denen Polyethylen, insbesondere in Form von LDPE (low density Polyethylen), besonders bevorzugt ist. Mischungen der genannten Polymere können ebenfalls im Rahmen der Erfindung als Basispolymer eingesetzt werden.
Handelt es sich beim Basispolymer um PVC, so kann dieses mit anderen Polymeren, insbesondere mit einem Terpolymer aus Ethylen, n-Butylacrylat und Carbonmonoxid, so konfektioniert werden, dass die schäumbare Zusammensetzung nicht mit dem Profilmaterial verklebt. Wird PVC als Basispolymer im Zusammenhang mit einem Profil aus PVC verwendet ist es auch möglich, die Haftung zwischen schäumbarer Zusammensetzung und dem Profilmaterial zuzulassen oder sogar zu begünstigen. In diesem Fall müssen Profil und Kernmaterial für das Recycling nicht getrennt werden, sodass die Haftung unproblematisch ist.

Das Basispolymer stellt in der Regel die Hauptkomponente der schäumbaren Zusammensetzung dar, wobei dessen Anteil an der Zusammensetzung vorzugsweise mindestens 50 Gew.-% beträgt. Besonders bevorzugt liegt der Gehalt an Basispolymer im Bereich von 65 bis 95 Gew.-%, insbesondere im Bereich von 70 bis 90 Gew.-% und am meisten bevorzugt im Bereich von 75 bis 85 Gew.%.

Die schäumbare Zusammensetzung kann thermisch oder durch elektromagnetische Strahlung geschäumt werden. Dazu enthält die schäumbare Zusammensetzung typischerweise ein chemisches oder physikalisches Treibmittel. Chemische Treibmittel sind organische oder anorganische Verbindungen, welche sich unter Einfluss von Temperatur, Feuchtigkeit oder elektromagnetischer Strahlung zersetzen, wobei mindestens eines der Zersetzungsprodukte ein Gas ist. Als physikalische Treibmittel können beispielsweise Verbindungen eingesetzt werden, welche bei erhöhter Temperatur in den gasförmigen Aggregatzustand übergehen. Dadurch sind sowohl chemische als auch physikalische Treibmittel in der Lage, Schaumstrukturen in Polymeren zu erzeugen.

Im Zusammenhang mit der vorliegenden Erfindung hat es sich als besonders zweckmäßig erwiesen, wenn die schäumbare Zusammensetzung thermisch schäumbar ist und bei einer Temperatur von kleiner gleich 250°C, insbesondere von 100°C bis 230°C, bevorzugt von 140°C bis 200°C geschäumt wird, wobei chemische Treibmittel eingesetzt werden. Als chemische Treibmittel haben sich insbesondere Azodicarbonamide, Sulphohydrazide, Hydrogencarbonate oder Carbonate als zweckmäßig erwiesen. Geeignete Azodicarbonamide sind beispielsweise das Azobisformamid. Geeignete Sulfohydrazide sind p-Toluolsulfonylhydrazid, Benzolsulfonylhydrazid und das p,p'-Oxybisbenzolsulfonylhydrazid. Ein geeignetes Hydrogencarbonat ist Natriumhydrogencarbonat. Besonders bevorzugte Treibmittel sind das Azobisformamid und das p,p'-Oxybisbenzolsulfonylhydrazid. Geeignete Treibmittel sind auch kommerziell erhältlich unter den Handelsnamen Expancell^{®} von der Firma Akzo Nobel, Niederlande, unter dem Handelsnamen Cellogen^{®} von der Firma Chemtura Corp., USA oder unter dem Handelsnamen Unicell^{®} von der Firma Tramaco, Deutschland.

Die für die Schäumung erforderliche Wärme kann durch externe oder durch interne Wärmequellen, wie einer exothermen chemischen Reaktion, zugeführt werden.

Hinsichtlich des Gehalts an Treibmittel unterliegt die vorliegende Erfindung keinen relevanten Beschränkungen. Es hat sich jedoch als zweckmäßig erwiesen, wenn das Treibmittel, in einem Gehalt von 5 bis 20 Gew.-%, insbesondere von 10 bis 18 Gew.-%, und besonders bevorzugt im Bereich von 12 bis 16 Gew.-%, bezogen auf die schäumbare Zusammensetzung, in dieser enthalten ist. In Fällen in denen eine geringere Expansion der Zusammensetzung erwünscht ist kann der Gehalt auch niedriger sein, insbesondere im Bereich von 5 bis 10 Gew.-%.

Die schäumbare Zusammensetzung, aus der der Polymerschaum hergestellt werden kann, enthält, wie vorstehend beschrieben, ebenfalls mindestens ein Gleitmittel und/oder mindestens einen Hitzestabilisator. In einer bevorzugten Ausführungsform enthält die schäumbare Zusammensetzung eine Komponente, die zugleich die Eigenschaften eines Gleitmittels, als auch eines Hitzestabilisators aufweist. In diesem Fall kann auf den Zusatz einer weiteren Gleitmittel- oder Hitzestabilisatorkomponente verzichtet werden.

Als Hitzestabilisatoren, die der schäumbaren Zusammensetzung gleichzeitig eine Gleitmittelwirkung verleihen, haben sich insbesondere Fettsäureamide, Fettsäuren und Fettsäurealkoholester als besonders geeignet erwiesen, deren lange aliphatische Kohlenstoffketten den gewünschten Effekt eines Gleitmittels vermitteln. Gleichzeitig fungieren diese Verbindungen als Hitzestabilisator. Als besonders zweckmäßig hat sich die Verwendung von Fettsäureamiden, Fettsäuren und Fettsäurealkoholester herausgestellt, die eine Kettenlänge des auf die Fettsäure, bzw. den Fettsäurealkohol zurückgehenden Anteils im Bereich von 6 bis 24, bevorzugt 8 bis 16, und insbesondere 10 bis 14 Kohlenstoffatomen aufweisen.

Im Rahmen der Erfindung haben sich Hitzestabilisatoren, die neben einer linearen aliphatischen Kette eine Thioetherfunktion aufweisen, als besonders geeignet erwiesen. Am meisten bevorzugt als Hitzestabilisatoren sind Fettsäurealkoholdiester in denen eine Thioetherfunktion im Säureanteil vorliegt, insbesondere das Didodecyl 3,3'-thiodipropionat.

Der Hitzestabilisator sollte in der Zusammensetzung mindestens in einer Menge enthalten sein, bei dem eine signifikante Stabilisierung der Zusammensetzung nach dem Schäumen zu beobachten ist, d.h. dass der Schaum auch bei längerer Exposition (10 Minuten oder mehr) bei hohen Temperaturen (150°C oder mehr) keiner signifikanten Volumenverminderung (10% oder mehr) unterliegt. Insbesondere hat sich im Rahmen der vorliegenden Erfindung ein Gehalt des Hitzestabilisators und/oder des Gleitmittels im Bereich von 0,1 bis 5 Gew.-%, und bevorzugt im Bereich von 0,5 bis 3 Gew.-%, bezogen auf die gesamte schäumbare Zusammensetzung, als geeignet erwiesen. Bei Gehalten von weniger als 0,1 Gew.-% ist die Menge des Hitzestabilisators nicht ausreichend um den Schaum hinlänglich zu stabilisieren, während bei Gehalten von mehr als 5 Gew.-% bei längerer Exposition des Schaum gegenüber hohen Temperaturen ebenfalls eine signifikante Abnahme des Schaumvolumens zu beobachten ist.

Weiterhin hat es sich als zweckmäßig erwiesen, wenn die schäumbare Zusammensetzung während der Schaumbildung stabilisiert und gefestigt wird. Dies kann durch den Zusatz von Vernetzungsmitteln gewährleistet werden, die vorzugsweise durch Abbauprodukte des Treibmittels aktiviert werden und eine Vernetzung des entstehenden Schaums auslösen. Dabei soll die Aushärtung der schäumbaren Zusammensetzung erst bei einer Temperatur einsetzen, welche gleich oder über dessen Schäumungstemperatur liegt, da ansonsten die Aushärtung der schäumbaren Zusammensetzung vor dessen Aushärtung erfolgt und dadurch nicht gewährleistet werden könnte, dass die schäumbare Zusammensetzung vor der Aushärtung den gesamten Hohlraum des Kunststoffprofils ausgefüllt hat und dass der Schaum eine kompakte Struktur aufweist.

Hinsichtlich der Vernetzung des erhaltenen Polymerschaums unterliegt die vorliegende Erfindung ebenfalls keinen relevanten Beschränkungen. Eine Vernetzung des Schaums ist insbesondere mit Hilfe von Vernetzungsmitteln möglich, die nicht mit dem Basispolymer reagieren, wie beispielsweise Epoxy-basierende Vernetzungsmittel, oder mit Hilfe von vernetzten, die mit dem Basispolymer reagieren. Ein Beispiel für solche Vernetzungsmittel sind Peroxid-Vernetzungsmittel. Im Rahmen der vorliegenden Erfindung ist eine Vernetzung mit Peroxid-Vernetzungsmitteln oder eine Vernetzung mit Epoxiden bevorzugt.

Bei der Vernetzung mit Peroxiden kann auf konventionelle organische Peroxide wie beispielsweise Dibenzoyl Peroxid, Dicumyl Peroxid, 2,5-Di-(t-butylperoxyl)-2,5-dimethylhexan, t-Butyl Cumyl Peroxid, α, α'-Bis(t-butylperoxy)diisopropylbenzene Isomermischung, Di-(t-amyl) Peroxid, Di-(t-butyl) Peroxid, 2,5-Di-(t-butylperoxy)-2,5-dimethyl-3-hexin, 1,1-Di(t-butylperoxy)-3,3,5-trimethylcyclohexan, n-Butyl 4,4-Di-(t-butylperoxy)valerat, Ethyl 3,3-Di-(t-amylperoxy)butanoat, oder t-Butyl Peroxy-3,5,5-trimethylhexanoat. Ein bevorzugtes Peroxid ist das Dicumylperoxid.

Beim Einsatz von Epoxy-basierenden Vernetzungsmitteln hat sich eine Mischung eines Epoxy-haltigen Polymers und eines Maleinsäureanhydridgruppen-enthaltenden Polymers als besonders zweckmäßig erwiesen. Bevorzugt handelt es sich bei dem Epoxy-haltigen Polymer um ein Copolymer aus Ethylen und Glycidylmethacrylat mit einem Gehalt an Glycidylmonomer im Bereich von 4 bis 12 Gew.-%. Das Maleinsäureanhydridgruppen enthaltende Polymer besteht vorzugsweise aus einem Terpolmer aus Ethylen, einem Acrylsäurealkylester, insbesondere auf Basis eines Alkylalkohols mit 2 bis 10 Kohlenstoffatomen, und Maleinsäureanhydrid. Der Gehalt an Maleinsäureanhydrid im Terpolymer liegt vorzugsweise im Bereich von 1,5 bis 5%. Besonders bevorzugt ist es, wenn diese beiden Vernetzungsmittelkomponenten in einem Verhältnis von 2:1 bis 1:2, insbesondere etwa 1:1 vorliegen.

Diese Polymerkombination erweist sich insbesondere in Kombination mit Treibmitteln, bei deren Erhitzen Wasser oder Alkohol freigesetzt wird, als besonders zweckmäßig, da durch das entstehende Wasser bzw. die Alkohole die Maleinsäureanhydridgruppen zu Maleinsäure hydrolysiert werden können, die wiederum eine Reaktion mit den Epoxygruppen des Epoxy-haltigen Polymers eingehen und eine Vernetzung bewirken.
In der schäumbaren Zusammensetzung ist das Vernetzungsmittel vorzugsweise mit einem Gehalt von 1 bis 25 Gew.-%, insbesondere im Bereich von 2 bis 18 Gew.-% und besonders bevorzugt im Bereich von 2 bis 10 Gew.-%, bezogen auf die Gesamte schäumbare Zusammensetzung, enthalten. Wird als Vernetzungsmittel ein Peroxid einbezogen, so kann dessen Konzentration jedoch auch niedriger liegen, insbesondere im Bereich von 1 bis 5 Gew.-%, und besonders bevorzugt im Bereich von 1 bis 2 Gew.-%.

In einer weiteren bevorzugten Ausführungsform ist die schäumbare Zusammensetzung frei von Vernetzungsmitteln.

Weiterhin hat es sich als vorteilhaft herausgestellt, wenn in die schäumbare Zusammensetzung zusätzlich mindestens einen Wärmereflektor, mindestens ein Wärmeverlustadditiv, mindestens ein Antikondensationsadditiv, mindestens ein Antioxidanz, Harnstoff und/oder mindestens einen Füllstoffe eingezogen werden. Zweckmäßige Wärmereflektoren stellen Graphit, Ruß und/oder Titandioxid dar. Zweckmäßig in den Polymerschaum einzubeziehende Füllstoffe sind Calciumcarbonat oder Talk, das in mit einem Gehalt von 0,5 bis 8 Gew.-%, insbesondere 1 bis 5 Gew.-%, und besonders bevorzugt in einer Menge von etwa 2 Gew.-%, in der Polymerschaum enthalten sein kann. Füllstoffe können beispielsweise als Nukleierungsmittel zugesetzt werden um die Schäumung zu verbessern. Geeignete Antioxidantien sind beispielsweise sterisch gehinderte Phenole.

Eine bevorzugte schäumbare Zusammensetzung umfasst
a) mindestens 50 Gew.-% mindestens eines Basispolymers,
b) 5-20 Gew.-% Treibmittel,
c) 0,1 bis 5 Gew.-% mindestens eines Gleitmittels und/oder mindestens eines Hitzestabilisators, wobei zusätzlich Additive, wie Vernetzungsmittel, Wärmereflektoren,
Wärmeverlust und/oder Füllstoffe enthalten sein können. In einer besonders bevorzugten Ausführungsform besteht die schäumbare Zusammensetzung im Wesentlichen aus den genannten Komponenten, wobei der Gehalt des Basispolymers dem zu 100 Gew.-% fehlenden Rest der Summe aller anderen Komponenten entspricht.

Eine weitere bevorzugte schäumbare Zusammensetzung umfasst
a) mindestens 50 Gew.-% mindestens eines Basispolymers,
b) 5 bis 10 Gew.-% Treibmittel,
c) 0,1 bis 5 Gew.-% mindestens eines Gleitmittels und/oder mindestens eines Hitzestabilisators, und
d) 0,5 bis 3 Gew.-% eines Peroxid-Vernetzungsmittels.

Eine weitere bevorzugte schäumbare Zusammensetzung umfasst
a) mindestens 50 Gew.-% mindestens eines Basispolymers,
b) 8 bis 20 Gew.-% Treibmittel,
c) 1 bis 3 Gew.-% mindestens eines Gleitmittels und/oder mindestens eines Hitzestabilisators, und
d) 1 bis 5 Gew.-% eines Füllstoffs, insbesondere CaCO₃, und enthält keinen zusätzlichen Vernetzungsmittel.

Ein weiterer Aspekt der vorliegenden Erfindung betrifft Polymerschäume, die eine Wärmeleitfähigkeit von < 0,04 W/(mK) aufweisen. Alternativ oder zusätzlich zu diesem Merkmal können die Polymerschäume eine Expansion von ≥ 1000%, insbesondere von ≥ 1500%, bevorzugt ≥ 2000% aufweisen. Bei der Schweißbarkeit des Polymerschaums ist es entscheidend, dass bei der Verschweißung beispielsweise von PVC-Profilen, die mit dem Polymerschaum gefüllt sind keine Rückstände auf dem Schweissspiegel verbleiben. Die Schäume sollten weiterhin vorzugsweise eine Schweißbarkeit von etwa 80 Sekunden bei 240- 260°C aufweisen. Zusätzlich ist der Polymerschaum bzw. die schäumbare Zusammensetzung vorzugweise durch mindestes eine weitere der im Folgenden aufgezählten Eigenschaften gekennzeichnet:
- Recyclingfähigkeit
- Minimales Schrumpfverhalten
- Kein Verbiegen von Stegen im Profil bzw. Verformen von Kammern des Profils
- Keine Abminderung der Eckfestigkeit
- Wasseraufnahme analog PVC
- Gasentwicklung während des Expansion unbedenklich
- Keine oder nur minimale Schädigung von PVC während des Schäumungsvorgangs
- Kein Materialaufbau im Werkzeug oder Werkzeugaufsatz
- Geruchsneutral
- Hitzestabil über lange Zeit
- Keine besonderen Arbeits- oder Lagervorschriften beim Profilhersteller.

In einer besonders bevorzugten Ausführungsform weist die schäumbare Zusammensetzung bzw. der fertige Polymerschaum alle der vorstehend genannten Eigenschaften auf.

Ein weiterer Aspekt der vorliegenden Erfindung betrifft Hohlkörper mit einem Hohlraum, in den eine schäumbare Zusammensetzung, wie vorstehend beschrieben, eingebracht und geschäumt wurde. Bei dem Hohlkörper handelt es sich insbesondere vorzugsweise um Kunststoffprofile mit geeigneten Formen für Fenster, Türen, und für den Torbereich, insbesondere um Rahmen und/oder Flügelprofile. Weiterhin ist es bevorzugt, wenn der Hohlraum, in den die schäumbare Zusammensetzung eingebracht wurde, mit dem entstandenen Polymerschaum gefüllt, insbesondere vollständig gefüllt ist.

In einer aus aktueller Sicht unter Umweltschutzaspekten und wirtschaftlich besonders wichtigen Ausgestaltung ist der Hohlkörper ein aus einem Kunststoffmaterial extrudiertes Profil, und der Dämmstoff wird in einem Koextrusionsprozess zugleich mit der Bildung des Kunststoffprofils in dieses eingebracht. Grundsätzlich ist die Erfindung aber auch mit stranggepressten Metallprofilen für Fenster- und Türrahmen und darüber hinaus bei andersartigen Produkten einsetzbar, etwa zur in-situ-Abdichtung von Fugen oder Dämmung von Hohlräumen in Baukörpern oder zur Fugenabdichtung und Dämmung von Profilen oder anderen Hohlräumen im Fahrzeug-, Flugzeug- und Schiffbau.

Als Kunststoff für die Herstellung der von Kunststoffhohlprofilen eignen sich typischerweise thermoplastisch verarbeitbare Kunststoffe, insbesondere Polyvinylchlorid (PVC), bevorzugt Hart-PVC (auch PVC-U bzw. *"unplasticised PVC"* genannt), Polypropylen (PP), Polymethyl(meth)acrylat (PMMA), Polycarbonat (PC) oder andere geeignete Thermoplaste. Insbesondere geeignet ist PVC, bevorzugt Hart-PVC. Ein Grund dafür ist u.a. die Witterungsbeständigkeit des PVCs und die damit verbundene Möglichkeit der Anwendung im Freien.

Weiterhin kann der Kunststoff für die Herstellung der Kunststoffhohlprofile zusätzliche Bestandteile enthalten, wie beispielsweise Stabilisatoren, insbesondere Licht- und Hitzestabilisatoren, Schlagzähigkeitsmodifikatoren, Weichmacher, Flammschutzmittel, Antistatika, Füllstoffe, Fasern, wie Glas- oder Kohlefasern, Farbstoffe oder Pigmente.

In Zusammenhang mit der Verwendung von Hart-PVC ist der Zusatz von Stabilisatoren notwendig, da Hart-PVC hitzeempfindlich ist und bei Temperaturen von etwa 140°C dessen Zersetzung beginnt.

Derartige Kunststoffhohlprofile können zweckmäßig durch ein Verfahren, bei dem eine wie vorstehend beschriebene Zusammensetzung während der Extrusion des Profils in mindestens einen der Hohlräume des Profils eingebracht und aufgeschäumt wird, hergestellt werden.

In einem weiteren Aspekt betrifft die vorliegende Erfindung im Allgemeinen ein Verfahren zur Herstellung von schaumgefüllten Hohlkörpern, wobei eine wie vorstehend beschriebene Zusammensetzung während der Extrusiuon des Hohlkörpers in mindestens einen Hohlraum des Hohlkörpers eingebracht und aufgeschäumt wird.

In einer besonders bevorzugten Ausführungsform des erfindungsgemäßen Verfahrens erfolgt die Herstellung des Schaums durch Aktivieren des Treibmittels in der schäumbaren Zusammensetzung unter Druck und anschließendes Austragen der Zusammensetzung in den Hohlraum eines Hohlkörpers, wobei die Zusammensetzung im Hohlraum mit einem derart hohen Volumenausdehnungsgradienten expandiert wird, dass der durch die Expansion gebildete Dämmstoff den Querschnitt des Hohlkörpers oder Hohlraums beim Eintritt unverzögert vollständig ausfüllt.

Es trifft also gewissermaßen der bereits expandierte Dämmstoff auf den vorgefertigten Hohlkörper oder den vorhandenen Hohlraum, ohne dass er vorher an anderer Stelle als selbständiger Körper existiert hätte und zu handhaben gewesen wäre.

Dies ermöglicht es, ausgeschäumte Hohlkörper oder Hohlräume unter effizienter Auslastung von Großserientechnik und ohne zwischengeschaltete Handhabungs- und Lagervorgänge separater Teile bereitzustellen. Dies wiederum ermöglicht erhebliche Produktionsvereinfachungen und Kosteneinsparungen insbesondere beim Weiterverarbeiter von entsprechend hergestellten Profilen und bietet somit andererseits dem Profilhersteller die Möglichkeit, diese Anwendervorteile zur Gewinnung von Marktanteilen zu nutzen und/oder die bei ihm selbst stattfindende höhere Wertschöpfung in seiner Preisgestaltung zu berücksichtigen. Im Übrigen ermöglicht der vorgeschlagene Herstellungsprozess eine hochstehende und einheitliche Prozess- und Qualitätskontrolle bei der Herstellung gedämmter Hohlkörper, insbesondere gedämmter Rahmenprofile, und führt damit zu einer für den Endverbraucher verlässlichen Produktqualität.

In einer Ausführung des erfindungsgemäßen Verfahrens ist vorgesehen, dass der Kunststoff-Spritzvorrichtung in Art eines Extruders oder einer Spritzgießmaschine festes Ausgangsmaterial in Granulatform zugeführt wird. Festes, granulares Ausgangsmaterial lässt sich leicht und kostengünstig konfektionieren, lagern und restarm verarbeiten und bietet somit erhebliche Vorteile gegenüber flüssigen oder pastösen Formulierungen.

In einer weiteren Ausführung der Erfindung ist vorgesehen, dass eine Kunststoff-Spritzvorrichtung mit mindestens einer Förderschnecke eingesetzt wird und die Kunststoff-Spritzvorrichtung derart konfiguriert ist sowie die mechanischen Eigenschaften des Ausgangsmaterials derart vorbestimmt sind, dass hohe Drücke und/oder Scherkräfte auftreten, die zu einer thermischen Aktivierung des Ausgangsmaterial mindestens beitragen. Bei dieser Ausgestaltung kann man u. U. ohne zusätzliche Heizeinrichtung der Kunststoff-Spritzvorrichtung auskommen und besonders energiesparend arbeiten. In einer anderen Ausgestaltung wird eine Kunststoff-Spritzvorrichtung mit einer Heizeinrichtung eingesetzt und die Heizeinrichtung derart betrieben, dass sie zu einer thermischen Aktivierung des Ausgangsmaterials mindestens beiträgt. Auch eine Kombination beider Wege zur Aktivierung des Ausgangsmaterials ist möglich.

In Figur 1 ist ein erfindungsgemäßes Koextrusions-Verfahren zur Herstellung von Kunststoffprofilen 1 mit einem geschäumten Dämm-Kern 2 schematisch dargestellt.

Dabei wird der Trichter 3 eines ersten Extruders 4 mit einem festen, thermoplastisch verarbeitbaren Kunststoff 5 gefüllt. Dieser Kunststoff kann in beliebiger Form vorliegen. Insbesondere liegt der Kunststoff als Granulat oder als Pulver vor. Der Kunststoff wird vorzugsweise bei einer Temperatur von 150°C bis 350°C, insbesondere von 170°C bis 260°C, bevorzugt von 180°C bis 220°C, extrudiert. Der Kunststoff 5 gelangt durch den Trichter 3 in das Innere des ersten Extruders 4. Hier wird der Kunststoff mittels einer Förderschnecke 6, welche durch einen Motor 7 über ein Getriebe 8 betrieben wird, in Richtung einer Düse 9 gefördert und gleichzeitig durch Heizelemente 10, welche am ersten Extruder angebracht sind, von außen auf eine Temperatur über seinen Schmelzpunkt beheizt, wodurch der Kunststoff schmilzt. Der aufgeschmolzene Kunststoff 5' wird durch die Düse 9, welche die Querschnittsgestalt des herzustellenden Profils aufweist, gepresst.

Parallel dazu wird eine schäumbare Zusammensetzung 11, insbesondere in Form von Granulat, in den Trichter 12 eines zweiten Extruders 13 gefüllt und gelangt dann über diesen ins Innere des zweiten Extruders. Die schäumbare Zusammensetzung wird mittels einer Förderschnecke 14, welche durch einen Motor 15 über ein Getriebe 16 betrieben wird, in Richtung einer Düse 17 gefördert. Durch eine geeignete geometrische Konfiguration der Schnecke und des Schneckenzylinders werden dabei gezielt hohe Drücke und Scherkräfte erzeugt, die zu einem Erweichen und einer Aktivierung des ursprünglich festen Granulats führen, und eine zusätzliche vorgesehene Heizeinrichtung 18 unterstützt diesen Vorgang.

An der Düse 17 wird die aktivierte schäumbare Zusammensetzung 11' unter nahezu schlagartiger Expansion, die durch eine spezielle geometrische Konfiguration der Düse gesteuert wird, in den Hohlraum des Kunststoffhohlprofils 1a koextrudiert, wo es mit den Innenwänden des Kunststoffholprofils in Berührung kommt. Das Einführen des Kunststoffprofils 1 in eine Kalibriereinrichtung 19 soll dabei gewährleisten, dass das Kunststoffhohlprofil bis zum Erstarren des Kunststoffs nicht durch den Druck der eingeschäumten Zusammensetzung verformt wird, sondern seine vorgegebene Querschnittsgestalt beibehält.

Nach der Kalibriereinrichtung 19 durchläuft das Kunststoffprofil 1 gegebenenfalls eine separate Kühleinrichtung, wobei es beispielsweise in ein Wasserbad gelangt oder von Wasserduschen besprüht wird. Am Ende des Koextrusions-Verfahrens wird über eine Abzugseinrichtung 20 das Kunststoffprofil 1 bei einer konstanten, an die Förderleistung der Extruder angepassten, Geschwindigkeit, abgezogen.

Mit dem im Vorstehenden beschriebenen schäumbaren Zusammensetzungen lassen sich Fenster und Türprofile herstellen, die ohne Verschmutzung der Profile schweißbar sind, bei denen eine mechanische Bearbeitung möglich ist (z.B. SFS 4,3 mm Festerbauschraube), und die die hohen Flammschutzerfordernisse von Fenstern (B2 schwer entflammbar nach ISO 14351 (Produktnorm Fenster) und DIN 4109 (Material) erfüllen herstellen. Gleichzeitig, sind die Materialen bei der Bearbeitung geruchsneutral, eventuell entstehender Staub ist nicht gesundheitsgefährdend und eine weitere Reduktion des Uf-Werts ist möglich.

Im Folgenden werden erfindungsgemäße schäumbare Zusammensetzungen und Polymerschäume, wie vorstehend beschrieben, anhand von Beispielen illustriert, die jedoch nicht in irgendeiner Weise als beschränkend für den Schutzumfang der vorliegenden Erfindung anzusehen sind.

### Beispiele

### Beispiel 1

Unterschiedliche LDPE-Schäume wurden mit Hilfe eines Extruders (Coperion ZSK 25) hergestellt. Alle untersuchten Schäume enthielten LDPE als Basispolymer, Treibmittel und ein Gemisch ein Glycidyl-Gruppen enthaltenden Polymers (Vernetzungsmittel 1) und eines Maleinsäuregruppen enthaltenden Polymers (Vernetzungsmittel 2) als Vernetzungsmittel. Als Treibmittel wurde Azobisformamid verwendet. Die untersuchten Zusammensetzungen sind in der folgenden Tabelle 1 angegeben:

**Tabelle 1**

| | **Probe 1** | **Probe 2** | **Probe 3** | **Probe 4** |
|---|---|---|---|---|
| LDPE | 82,00 | 81,06 | 80,12 | 79,18 |
| Vernetzungsmittel 1 | 2,5 | 2,47 | 2,44 | 2,41 |
| Vernetzungsmittel 2 | 2,5 | 2,47 | 2,44 | 2,41 |
| Treibmittel | 13,00 | 13,00 | 13,00 | 13,00 |
| Hitzstabilisator | | 1,00 | 2,00 | 3,00 |

Der erhaltene Schaum wurde anschließend einer Hitzebehandlung bei 180°C auf einem mit einer PTFE-Folie behandelten Metallgitter unterzogen. Das Expansionsverhalten der mit einem Hitzestabilisator stabilisierten Schäume (Proben 2 bis 4) wies gegenüber der Probe 1 deutliche Unterschiede auf. Während alle Schäume maximale Expansionen von etwa 2000% zeigten, beginnt der ohne Hitzestabilisator hergestellte Schaum nach etwa 10 Minuten zu schrumpfen. Nach etwa 30 Minuten hat sich sein Volumen auf etwa 50% des Maximalvolumens reduziert. Das bei der Probe 1 erreichte Maximalvolumen ist ebenfalls etwa 5 bis 10% geringer als bei den anderen Schäumen. Im Gegensatz dazu zeigen die Proben 2 bis 4 bei derselben thermischen Behandlung ein deutlich geringer ausgeprägtes Schrumpfverhalten, wobei bei den Proben 2 und 3 (Gehalten von 1 bis 2 Gew.-% an Hitzstabilisator) nahezu keine Veränderung der maximalen Ausdehnung zu beobachten ist. Bei der Probe 4 verliert der Schaum etwa 5% seines maximalen Volumens, dies ist jedoch wesentlich geringer ist als bei Probe 1.

## Patentansprüche

**1.** Schäumbare Zusammensetzung umfassend
a) mindestens ein Basispolymer,
b) mindestens ein Treibmittel,
c) mindestens ein Gleitmittel und/oder mindestens einen Hitzestabilisator.

**2.** Schäumbare Zusammensetzung gemäß Anspruch 1, **dadurch gekennzeichnet, dass** das Basispolymer einen Schmelzpunkt von 20°C bis 400°C, insbesondere von 60 bis 200°C aufweist.

**3.** Schäumbare Zusammensetzung gemäß Anspruch 1 oder 2, **dadurch gekennzeichnet, dass** das Basispolymer ausgewählt ist aus der Gruppe umfassend EVA, Polyolefin, PVC oder XPS (quervernetztes Poylstyrol).

**4.** Schäumbare Zusammensetzung gemäß einem der Ansprüche 1 bis 3, **dadurch gekennzeichnet, dass** das Treibmittel ausgewählt ist aus der Gruppe bestehend aus Azodicarbonamiden, Sulfohydraziden, Hydrogencarbonaten und Carbonaten.

**5.** Schäumbare Zusammensetzung gemäß einem vorangehenden Ansprüche, **dadurch gekennzeichnet, dass** der Hitzestabilisator ausgewählt ist aus Fettsäureamiden, Fettsäuren und Fettsäurealkoholestern, insbesondere mit einer Kettenlänge von 6 bis 24 Kohlenstoffatomen des Fettsäure- bzw. des Fettsäurealkoholanteils.

**7.** Schäumbare Zusammensetzung gemäß einem vorangehenden Ansprüche, **dadurch gekennzeichnet, dass** der Gehalt an Hitzestabilisator und/oder Gleitmittel in der Zusammensetzung im Bereich von 0,1 bis 5 Gew.-%, insbesondere 0,5 bis 3 Gew.-% liegt.

**8.** Schäumbare Zusammensetzung gemäß einem vorangehenden Ansprüche, **dadurch gekennzeichnet, dass** die Zusammensetzung zusätzlich mindestens einen Vernetzungsmittel, insbesondere eine Peroxid-Verbindung oder eine EpoxyVerbindung, enthält.

**9.** Schäumbare Zusammensetzung gemäß Anspruch 8, **dadurch gekennzeichnet, dass** das Vernetzungsmittel eine Mischung eines Epoxy-haltigen Polymers und eines Maleinsäuregruppen enthaltenden Polymers umfasst.

**10.** Schäumbare Zusammensetzung gemäß einem der vorangehenden Ansprüche, **dadurch gekennzeichnet, dass** die Zusammensetzung zusätzlich mindestens einen Wärmereflektor, mindestens ein Wärmeverlustadditiv, mindestens ein AntiKondensationsadditiv und/oder mindestens einen Füllstoff enthält.

**11.** Schäumbare Zusammensetzung gemäß Anspruch 10, **dadurch gekennzeichnet, dass** als Wärmereflektor Graphit, Russ und/oder Titandioxid einbezogen wird.

**12.** Polymerschaum erhältlich durch Expandieren einer Zusammensetzung gemäß den Ansprüchen 1 bis 11.

**13.** Polymerschaum, **gekennzeichnet durch** eine Wärmeleitfähigkeit von < 0.04 W/(mK), eine Expansion von ≥ 1000%, bevorzugt von ≥ 1500% und insbesondere von ≥ 2000% und/oder eine Schweißbarkeit von etwa 80 Sekunden bei 240- 260°C.

**14.** Verwendung einer schäumbaren Zusammensetzung zum Ausschäumen von Hohlräumen in Hohlkörpern, insbesondere in Fenster- oder Türprofilen.

**15.** Schaumgefüllter Hohlkörper, insbesondere in Form eines Fenster- oder Türprofils, **dadurch gekennzeichnet, dass** er mindestens einen Hohlraum aufweist, der mit einem Polymerschaum gemäß einem der Ansprüche 12 oder 13 gefüllt ist.

**16.** Verfahren zur Herstellung eines schaumgefüllten Hohlkörpers gemäß Anspruch 15, **dadurch gekennzeichnet**, das eine Zusammensetzung gemäß einem der Ansprüche 1 bis 11 während der Extrusion des Hohlkörpers in mindestens einen Hohlraum des Hohlkörpers eingebracht und aufgeschäumt wird.
